(19) **Europäisches Patentamt**
**European Patent Office**
**Office européen des brevets**

(11) **EP 4 290 615 A1**

(12) **EUROPEAN PATENT APPLICATION**
published in accordance with Art. 153(4) EPC

(43) Date of publication:
**13.12.2023 Bulletin 2023/50**

(21) Application number: **22926535.0**

(22) Date of filing: **22.02.2022**

(51) International Patent Classification (IPC):
**H01M 4/525** (2010.01)  **H01M 4/62** (2006.01)
**H01M 10/0525** (2010.01)

(52) Cooperative Patent Classification (CPC):
**Y02E 60/10**

(86) International application number:
**PCT/CN2022/077289**

(87) International publication number:
**WO 2023/155215 (24.08.2023 Gazette 2023/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.02.2022 CN 202210142538**

(71) Applicants:
• **BTR NANO TECH CO., LTD.**
**Shenzhen, Guangdong 518106 (CN)**
• **Panasonic Energy Co., Ltd.**
**Osaka 570-8511 (JP)**

(72) Inventors:
• **HUANG, Youyuan**
**Shenzhen, Guangdong 518106 (CN)**
• **YANG, Shunyi**
**Shenzhen, Guangdong 518106 (CN)**

• **SONG, Xiong**
**Shenzhen, Guangdong 518106 (CN)**
• **ZHANG, Hongxu**
**Shenzhen, Guangdong 518106 (CN)**
• **YAN, Wuwei**
**Shenzhen, Guangdong 518106 (CN)**
• **LUO, Liang**
**Shenzhen, Guangdong 518106 (CN)**
• **NOMURA, Shun**
**Daito-shi, Osaka 574--0035 (JP)**
• **MORITA, Koki**
**Daito-shi, Osaka 574--0035 (JP)**
• **SHINOMIYA, Takuya**
**Daito-shi, Osaka 574--0035 (JP)**

(74) Representative: **advotec.**
**Patent- und Rechtsanwaltspartnerschaft Tappe mbB**
**Widenmayerstraße 4**
**80538 München (DE)**

(54) **POSITIVE ELECTRODE MATERIAL AND PREPARATION METHOD THEREFOR, AND LITHIUM-ION BATTERY**

(57) The present application relates to the field of cathode material, and a cathode material and a method for preparing the same, lithium ion battery provided. The cathode material includes secondary particle which includes a plurality of primary particles, where the primary particle includes an active material having a chemical formula $Li_bNi_xCo_yM_zR_wO_2$, where $0.95 \leq b \leq 1.10$, $0.8 \leq x < 1$, $0 < y+z+w \leq 0.2$, $x+y+z+w=1$, $0.0001 \leq w \leq 0.003$; M is selected from at least one of Mn and Al, R is a metal; Phosphate compound coating layer are uniformly distributed on the surface of the cathode material, including a first coating layer and a second coating layer, where the first coating layer forms on the surface of the primary particle, the second coating layer forms on the surface of the secondary particle, and the first coating layer and the second coating layer both include phosphate compound. The single point phosphorus content at various locations on the surface of the cathode material have little difference with the average phosphorus content on the surface of the cathode material. The cathode material of this application can effectively improve the rate performance, thermal and cycling stability of lithium battery, and has the characteristics of low cost and easy large-scale production.

EP 4 290 615 A1

FIG. 1

**Description**

The present application claims the benefit of priority of the Chinese Patent Application No. 202210142538.0 filed with the China Patent Office on February 16, 2022 with the title of "Cathode Material and Method for Preparing the Same, Lithium Ion Battery," which is incorporated herein by reference in its entirety.

TECHNICAL FIELD

The present application relates to the field of cathode material and, in particular, to cathode material and method for preparing the same, lithium ion battery.

BACKGROUND

Lithium ion battery is widely used in electric vehicles and consumer electronics due to the advantages of high energy density, high output power, long cycle life, and little environmental pollution. It has been a research direction for developers to improve the rate performance, thermal stability, and cycling stability of a lithium ion battery. In the nickel-rich cathode material of the prior art, the particles crack after a long cycle such that the internal structure tend to directly exposure, affecting the long cycle stability of the cathode material and the rate performance of the lithium ion battery.

Based on this, it is desirable to develop a cathode material and a method for preparing the same to improve coating uniformity, thereby improving the rate performance, thermal stability and cycling stability of lithium ion battery, reducing production costs.

SUMMARY

In view of this, the present application provides a cathode material and a method for preparing the same, a lithium ion battery, which may improve the coating uniformity, precisely control the amount of coating, improve the rate performance, thermal stability and cycling stability of the lithium ion battery, and reduce production costs.

In a first aspect, an embodiment of the present application provide a cathode material including:

a secondary particle including a plurality of primary particles, where the primary particle includes an active material having a chemical formula $Li_bNi_xCo_yM_zR_wO_2$, where $0.95 \leq b \leq 1.10$, $0.8 \leq x < 1$, $0 < y+z+w \leq 0.2$, $x+y+z+w=1$, $0.0001 \leq w \leq 0.003$; M is selected from at least one of Mn and Al; and R is a doped metal; and
a coating layer including a first coating layer and a second coating layer, where the first coating layer forms on a surface of the primary particle, the second coating layer forms on a surface of the secondary particle, and the first coating layer and the second coating layer both include phosphate compound;
the single point phosphorus content a' at any point on the surface of the cathode material and the average phosphorus content a on the surface of the cathode material satisfy the following relationship:

$$0.9a \leq a' \leq 1.1a;$$

where, a' and a are obtained by the following test method:
in the case of observing the cathode material by a scanning electron microscope, conducting an EDS point scanning at any point on the surface of cathode material for testing phosphorus content to obtain the a', while conducting an EDS surface scanning at a quadrilateral area randomly selected having a side length of 100 $\mu$m in the field of view of the scanning electron microscope for testing phosphorus content to obtain the a.

In conjunction with the first aspect, in a feasible embodiment, R in the $Li_bNi_xCo_yM_zR_wO_2$ includes at least one of Co, Mn, Al, Ti, Zr, Sr, Mg, Ca, Y, Ba, Cu, W, Nb, La, Ce, Mo and Sn.

In conjunction with the first aspect, in a feasible embodiment, the cathode material satisfies at least one of the following conditions a to k:

a. the secondary particle is spherical or spherical-like in shape;
b. the primary particles have an average particle size of 200 nm to 1000 nm, and the secondary particles have an average particle size of 3 $\mu$m to 20 $\mu$m;
c. the phosphate compound includes at least one of $Li_3PO_4$ and $LiR_k(PO_4)_r$, where $0 < k \leq 2$, $0 < r \leq 2$, and R is selected from at least one of Co, Nb, Al, Ti, Zr, Sr, Mg, Ca, Y, Ba, Cu, W, Nb, La, Ce, Mo and Sn;
d. a preparation raw material of the phosphate compound of the first coating layer includes metal phosphate and lithium compound, and a preparation raw material of the phosphate compound of the second coating layer includes at least one of phosphoric acid, metaphosphoric acid, phosphorous acid, metaphosphorous acid, pyrophosphoric acid, hypophosphoric acid, soluble phosphate, soluble metaphosphate, soluble phosphite, soluble metaphosphite, soluble pyrophosphate and soluble hypophosphate;

e. a content of phosphate group of the phosphate compound in the first coating layer accounts 0.03 wt% to 0.3 wt% of the total mass of the secondary particle;

f. a content of phosphate group of the phosphate compound in the second coating layer accounts 0.1 wt% to 0.7 wt% of the total mass of the secondary particle and the first coating layer;

g. a content of crystalline phosphate group of the phosphate compound in the first coating layer or the second coating layer accounts 5 wt% to 50 wt% of the total mass of phosphate group;

h. the first coating layer has a thickness of 0.005 $\mu$m to 0.05 $\mu$m;

i. the second coating layer has a thickness of 0.02 $\mu$m to 0.2 $\mu$m;

j. the powder conductivity of the cathode material is greater than 0.02 S/cm under pressure of 4 kN/cm$^2$; and

k. the specific surface area of the cathode material is 0.2 m$^2$/g to 2.0 m$^2$/g.

As used herein, the term "crystalline phosphate group" refers to a phosphate group in compound containing phosphate that are present as crystalline.

In a second aspect, the present application provides a method for preparing a cathode material, where the method including the following:

mixing $Ni_aCo_bM_cO$ or $Ni_aCo_bM_c(OH)_2$, a lithium compound, and a metal phosphate to obtain a mixture, sintering the mixture to obtain a sintered material, wherein a+b+c=1, 0.8:Sa<1, 0<b+c≤0.2, M is selected from at least one of Mn or Al, the sintered material includes a plurality of primary particles and a first coating layer forming on surface of the primary particle, the first coating layer includes phosphate compound, and the metal phosphate has an average particle size of less than 0.5 $\mu$m; and

washing by a solvent and drying the sintered material at 50°C or below to obtain the cathode material, where the cathode material includes a secondary particle and a second coating layer forming surface of the secondary particle, the secondary particle is an aggregate of primary particles, and the second coating layer includes phosphate compound.

In conjunction with the second aspect, in a feasible embodiment, the method satisfies at least one of the following conditions a to f:

a. the lithium compound is added in an amount such that the ratio of the total molar content of Ni, Co, M, and the metal element in the metal phosphate to the molar content of Li is 1:(0.95 to 1.10);

b. the lithium compound includes at least one of lithium carbonate, lithium hydroxide, lithium acetate, lithium nitrate and lithium oxalate;

c. a metal element of the metal phosphate is selected from at least one of Co, Nb, Al, Ti, Zr, Sr, Mg, Ca, Y, Ba, Cu, W, Nb, La, Ce, Mo and Sn;

d. a content of phosphate group in the metal phosphate is 0.03 wt% to 0.3 wt% of the total mass of the mixture;

e. a condition for obtaining the mixture is: solid phase mixing at 10°C to 50°C for 0.3 h to 2 h; and

f. a condition for obtaining the sintered material is: sintering at 650°C to 850°C for 6 h to 20 h under an oxygen-containing atmosphere.

In conjunction with the second aspect, in a feasible embodiment, the method satisfies at least one of the following conditions a to b:

a. the solvent includes water and a non-aqueous material, where the non-aqueous material includes at least one of phosphoric acid, metaphosphoric acid, phosphorous acid, metaphosphorous acid, pyrophosphoric acid, hypophosphoric acid, soluble phosphate, soluble metaphosphate, soluble phosphite, soluble metaphosphite, soluble pyrophosphate, and soluble hypophosphate; and

b. a content of phosphate group in the solvent accounts 0.1 wt% to 0.7 wt% of the total mass of the sintered material.

In conjunction with the second aspect, in a feasible embodiment, the method satisfies at least one of the following conditions a to f:

a. a temperature of the washing is 10°C to 50°C;

b. a concentration of the slurry consisted of the sintered material and the solvent (sintered material (g)/solvent (L)) is 500 g/L to 2000 g/L;

c. a time of the washing is 10 min to 120 min;

d. the drying is carried out under nitrogen atmosphere condition;

e. a temperature of the drying is 80°C to 200°C; and

f. a time of the drying is 5 h to 48 h.

In conjunction with the second aspect, in a feasible embodiment, after washing by a solvent and drying the sintered material, the method further includes:

placing the washed and dried sintered material in an oxygen-containing atmosphere for a heat treatment at 150°C to 600°C for 4 h to 10 h to obtain the cathode material.

In conjunction with the second aspect, in a feasible embodiment, the method satisfies at least one of the following conditions a to f:

a. the metal phosphate reacts with the lithium compound at high temperature to form the first coating layer of the primary particle;

b. phosphate anion in the solvent reacts with residual lithium on surface of the sintered material to form the second coating layer of the secondary particle;

c. the phosphate compound includes at least one of $Li_3PO_4$ and $LiR_k(PO_4)_r$, where $0<k\leq2$, $0<r\leq2$, R is selected from at least one of Co, Mn, Al, Ti, Zr, Sr, Mg, Ca, Y, Ba, Cu, W, Nb, La, Ce, Mo and Sn;

d. a content of crystalline phosphate group of the phosphate compound in the first coating layer or the second coating layer accounts 5 wt% to 50 wt% of the total mass of phosphate group;

e. the primary particles have an average particle size of 200 nm to 1000 nm, and the first coating layer has a thickness of 0.005 $\mu$m to 0.05 $\mu$m; and

f. the secondary particles have an average particle size of 3 $\mu$m to 20 $\mu$m and the second coating layer has a thickness of 0.02 to 0.2 $\mu$m.

In a third aspect, the present application provides a lithium ion battery including a cathode material as described in the first aspect or cathode material prepared by the method for preparing the cathode material as described in the second aspect.

The technical solutions of the present application have at least the following beneficial effects:

Firstly, the cathode material provided by the present application includes a secondary particle formed by close combination of a plurality of primary particles, where the primary particle has the first coating layer, and the secondary particle has the second coating layer, the materials of the first coating layer and the second coating layer both are phosphate compound. This internal and surface coating method synergistically improves structural stability, safety, rate performance, long cycle performance and processing performance of the cathode material, which facilitates formation of high lithium ion conductive network, improving lithium ion conductivity of the material, and reducing battery impedance. The second coating layer on the surface of the secondary particle not only protects the surface of the secondary particle from being corroded by electrolyte, and improves thermal stability, but also increases lithium ion diffusion rate, such that the resulting cathode material has both of high rate performance and good thermal stability. The first coating layer also has the features described above. Moreover, the first coating layer forms a phosphate compound coating layer with high ionic conductivity at the grain boundary between primary particles, which reduces the grain boundary transport impedance and is conducive to improve the rate performance of the cathode material. In addition, the single point phosphorus content a' at any point on the surface of the cathode material and the average phosphorus content a on the surface of the cathode material satisfies $0.9a\leq a'\leq1.1a$, indicating that the single point phosphorus content at various locations on the surface of the cathode material is close to the average phosphorus content on the surface of the cathode material. The phosphorus content in the coating layer is evenly distributed, inhibiting the loss of lattice lithium on the surface of the cathode material (i.e., lithium ion present inside the lattice), reducing the free lithium content on the surface of the material, thereby improving its rate performance, while inhibiting side reactions of the material with the electrolyte, improving cycling stability of the material, allowing good processing performance and safety for the cathode material.

Secondly, the method for preparing the cathode material provided by the present application, by sintering once at a high temperature, uniformly diffuse the phosphate on the surface of the material, enables coating of the primary particle of the cathode material, while achieving metal cation doping. On the other hand, washing the sintered material with solvent including non-aqueous material at 50°C or below uniformly precipitates the phosphate on the surface of the secondary particle of the material, forming a uniform phosphate compound coating layer, thus improving structural stability, thermal stability, safety, rate performance, long cycle performance, and processing performance of the cathode material.

BRIEF DESCRIPTION OF DRAWINGS

FIG. 1 is a structure diagram of a cathode material provided by an embodiment of the present application;
FIG. 2 is a process flow diagram of a method for preparing cathode material provided by an embodiment of the present application;
FIGs. 3a and 3b are scanning electron microscope photos of the cathode material of Example 1 at different magnifications;
FIGs. 4a and 4b are scanning electron microscope photos of the cathode material of Comparative Example 1 at different magnifications;
FIG. 5 is a graph of the rate performance of the cathode materials of Example 1 and Comparative Example 1;
FIG. 6 is a differential scanning thermal curve (DSC) of the cathode materials of Example 1 and Comparative Example 1.

DESCRIPTION OF EMBODIMENTS

The following are preferred embodiments of the examples of the present application. It should be noted that, for those of ordinary skill in the art, many modifications and adaptations may be made without departing from the principles of the embodiments of the present application, which are also considered to fall within the scope of the embodiments of the present application.

After a long cycle, the internal structure of the cathode material with rich nickel of the prior art tends to directly exposure due to particles cracking, which affecting the long cycle stability of the cathode material and the rate performance of the lithium battery. In order to improve the rate performance, thermal stability and cycling stability of lithium ion battery, an embodiment of the present application provide a cathode material.

The cathode material includes: a secondary particle 10 including a plurality of primary particles 11, where the primary particle 11 includes an active material having a chemical formula of $Li_bNi_xCo_yM_zR_wO_2$, where $0.95 \leq b \leq 1.10$, $0.8 \leq x < 1$, $0 < y+z+w \leq 0.2$, $x+y+z+w=1$, $0.0001 \leq w \leq 0.003$; M is selected from at least one of Mn and Al; and R is a doped metal 112; and

a coating layer including a first coating layer 111 and a second coating layer 101, where the first coating layer 111 forms on a surface of the primary particle 11, the second coating layer 101 forms on a surface of the secondary particle 10, and the first coating layer 111 and the second coating layer 101 both include phosphate compound;
the single point phosphorus content a' at any point on the surface of the cathode material and the average phosphorus content a on the surface of the cathode material satisfy the following relationship:

$$0.9a \leq a' \leq 1.1a;$$

where, a' and a are obtained by the following test method:
in the case of observing the cathode material by a scanning electron microscope, conducting an EDS point scanning at any point on the surface of cathode material for testing phosphorus content to obtain the a', while conducting an EDS surface scanning at a quadrilateral area randomly selected having a side length of 100 $\mu$m in the field of view of the scanning electron microscope for testing phosphorus content to obtain the a.

The cathode material provided by the present application includes a secondary particle formed by close combination of a plurality of primary particles, where the primary particle has the first coating layer, the secondary particle has the second coating layer, the materials of the first coating layer and the second coating layer both are phosphate compound, and the single point phosphorus content a' at any point on the surface of the cathode material and the average phosphorus content a on the surface of the cathode material satisfies $0.9a \leq a' \leq 1.1a$, indicating that the distribution of the phosphorus content at various locations on the surface of the cathode material has less different, the coating layer is evenly distributed. This internal and surface both coating method facilitates formation of high lithium ion conductive network, improving lithium ion conductivity of the material, and reducing battery impedance. The second coating layer on the surface of the secondary particle not only protects the surface of the secondary particle from being corroded by electrolyte, and improves thermal stability, but also increases lithium ion diffusion rate, such that the resulting cathode material has both of high rate performance and good thermal stability. The first coating layer also has the features described above. Moreover, the first coating layer forms a phosphate compound coating layer with high ionic conductivity at the grain boundary between primary particles, which reduces the grain boundary transport impedance and is conducive to improve the rate performance of the cathode material. Thus, this internal and surface combined coating method synergistically improves structural stability, thermal stability, safety, rate performance, long cycle performance and processing performance of the cathode material.

Specifically, the value of b may be, for example, 0.95, 0.98, 1.01, 1.03, 1.05, or 1.10, etc. The value of x may be, for example, 0.8, 0.83, 0.88, 0.91, 0.94, 0.98, or 0.99, etc. The value of y+z+w may be, for example, 0.02, 0.06, 0.09, 0.12, 0.17, or 0.2, etc. The value of w may be, for example, 0.0001, 0.0005, 0.0010, 0.0015, 0.0020, 0.0025 or 0.0030, etc. Which are not limited herein.

Optionally, R in the $Li_bNi_xCo_yM_zR_wO_2$ includes at least one of Co, Nb, Al, Ti, Zr, Sr, Mg, Ca, Y, Ba, Cu, W, Nb, La, Ce, Mo and Sn.

It is noted that the contents of each elemental in the active material $Li_bNi_xCo_yM_zR_wO_2$ can be determined by known ICP, ICP-MS, and the like, as well known instruments for qualitative analysis and/or quantitative analysis of elements.

The primary particle is a single fine crystal grain, and the secondary particle is a particle formed by agglomeration of the primary particles. Preferably the secondary particle is an aggregate of primary particles. The secondary particle is compact inside, and the secondary particle is spherical or spherical-like in shape.

The cathode material provided in this application is examined jointly by scanning electron microscopy (SEM) and particle size testing, and it is found that the average particle size of primary particle D50 of the active material is 200 nm to 1000 nm, for example, may be 200 nm, 300 nm, 400 nm, 500 nm, 600 nm, 700 nm, 800 nm, or 1000 nm.

The average particle size of the secondary particles is 3 $\mu$m to 20 $\mu$m, for example, may be 3 $\mu$m, 4 $\mu$m, 5 $\mu$m, 6 $\mu$m, 7 $\mu$m, 8 $\mu$m, 9 $\mu$m, 10 $\mu$m, 11 $\mu$m, 12 $\mu$m, 13 $\mu$m, 15 $\mu$m or 20 $\mu$m, etc. Preferably, the average particle size of the secondary particles is 10 $\mu$m to 13 $\mu$m. The applicant has discovered by numerous experiments that when the average particle size of the secondary particles is controlled within the range of 3 $\mu$m to 20 $\mu$m, the cracking of the secondary particles during cycling can be avoided, which facilitates to improve the structural stability, thermal stability and long cycle stability of the secondary particle.

In some embodiments herein, the thickness of the first coating layer is 0.005 $\mu$m to 0.05 $\mu$m, for example, may be 0.005 $\mu$m, 0.01 $\mu$m, 0.015 $\mu$m, 0.02 $\mu$m, 0.025 $\mu$m, 0.03 $\mu$m, 0.035 $\mu$m, 0.04 $\mu$m, 0.045 $\mu$m, or 0.05 $\mu$m. The thickness of the first coating layer may also be other values within the ranges above, which are not limited herein.

In some embodiments herein, the thickness of the second coating layer is 0.02 $\mu$m to 0.2 $\mu$m, for example, may be 0.02 $\mu$m, 0.03 $\mu$m, 0.05 $\mu$m, 0.08 $\mu$m, 0.1 $\mu$m, 0.13 $\mu$m, 0.15 $\mu$m, 0.18 $\mu$m, or 0.2 $\mu$m. The thickness of the first coating layer may also be other values within the ranges above, which are not limited herein.

In some embodiments herein, the phosphate compound includes at least one of $Li_3PO_4$ and $LiR_k(PO_4)_r$, where $0<k\leq2$, $0<r\leq2$, R is selected from at least one of Co, Nb, Al, Ti, Zr, Sr, Mg, Ca, Y, Ba, Cu, W, Nb, La, Ce, Mo and Sn.

The phosphate compound not only has high lithium ion conductivity, but also can reduce residual alkali at the surface of the cathode material. This internal and surface both coating method facilitates formation of the coating layer having high lithium ion conductivity and isolating comprehensively the active material from electrolyte.

Specifically, raw materials for preparation of phosphate compounds of the first coating layer includes metal phosphate and lithium compound, which is a phosphate compound formed by a high temperature reaction of the metal phosphate with the lithium compound, with the aim of both phosphate compound coating and metal cation doping of the primary particle of the cathode material during the sintering process.

Raw materials for preparation of phosphate compounds of the second coating layer includes at least one of phosphoric acid, metaphosphoric acid, phosphorous acid, metaphosphorous acid, pyrophosphoric acid, hypophosphoric acid, soluble phosphate, soluble metaphosphate, soluble phosphite, soluble metaphosphite, soluble pyrophosphate and soluble hypophosphate; the second coating layer is a phosphate compound formed by the reaction of the non-aqueous substance added in the washing process with the residual lithium on the surface of the sintered material, and the phosphate compound includes at least $Li_mPO_n$ with high lithium ion conductivity, where $1\leq m\leq3$, and $1\leq n\leq4$.

The content of phosphate group in the first coating layer accounts 0.03 wt% to 0.3 wt% of the total mass of the secondary particle. Preferably, the content of phosphate group accounts 0.075 wt% to 0.175 wt%, for example, may be 0.075 wt%, 0.1 wt%, 0.125 wt%, 0.15 wt% or 0.175 wt%.

The content of phosphate group in the second coating layer accounts 0.1 wt% to 0.7 wt% of the total mass of the secondary particle and the first coating layer. Preferably, the content of phosphate group accounts 0.3 wt% to 0.5 wt%, for example, may be 0.3 wt%, 0.35 wt%, 0.4 wt%, 0.45 wt% or 0.5 wt%. The applicant has discovered by numerous experiments that when the phosphate group is controlled within the range above, the primary particle or the secondary particle can achieve good coating effects without reducing the capacity of the cathode material.

It is noted that first coating is the first coating treatment of the cathode material, and second coating is the second coating treatment of the cathode material.

The second coating layer on the surface of the secondary particle not only protects the surface of the secondary particle from being corroded by electrolyte, and improves thermal stability, but also increases lithium ion diffusion rate, and reduces residual alkali at the surface, such that the resulting cathode material has all of high rate performance, good thermal stability, good processing performance and good thermal stability.

The first coating layer on the surface of the primary particle also has the features described above. Moreover, the first coating layer also prevents the primary particle of the cathode material from directly contacting the electrolyte when the secondary particle suffers cracking, thus inhibiting side reactions, which is beneficial to improve the structural stability, thermal stability and long cycle stability of the secondary particle. Further, a phosphate compound coating layer with high ionic conductivity at the grain boundary between primary particles is formed, which reduces the grain boundary transport impedance and is conducive to improve the rate performance of the cathode material. The internal and surface combined coating method synergistically improves structural stability, thermal stability, safety, rate performance, long cycle performance and processing performance of the cathode material.

In the cathode material provided by the present application, a content of crystalline phosphate group of the coating layer containing the phosphate compound accounts 5 wt% to 50 wt% of the total mass of phosphate, for example, may be 5 wt%, 10 wt%, 20 wt%, 30 wt%, 40 wt% or 50 wt%.

The cathode material is a ternary cathode material, the powder conductivity of the cathode material is greater than 0.02 S/cm under pressure of 4 $kN/cm^2$, which can effectively increase the discharge capacity at high rates.

The specific surface area of the cathode material is 0.2 $m^2/g$ to 2.0 $m^2/g$. Preferably, the specific surface area of the cathode material is 0.3 $m^2/g$ to 0.8 $m^2/g$, for example, may be 0.3 $m^2/g$, 0.4 $m^2/g$, 0.5 $m^2/g$, 0.6 $m^2/g$, 0.7 $m^2/g$, 0.8 $m^2/g$, etc. The applicant has discovered by numerous experiments that when the specific surface area of the cathode material is controlled within the range of 0.2 $m^2/g$ to 2.0 $m^2/g$, it facilitates to increase the cycling performance of the lithium ion battery made of the cathode material.

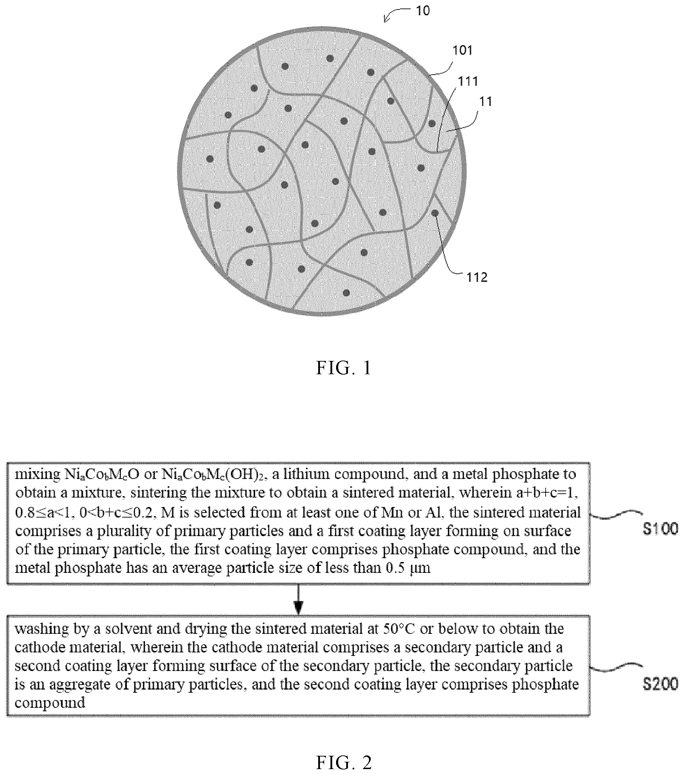

The present application further provides a method for preparing the cathode material, as shown in FIG. 2, the method includes the following steps S100 to S200:

S100, mixing $Ni_aCo_bM_cO$ or $Ni_aCo_bM_c(OH)_2$, a lithium compound, and a metal phosphate to obtain a mixture, sintering the mixture to obtain a sintered material, wherein a+b+c=1, 0.8≤a<1, 0<b+c≤0.2, M is selected from at least one of Mn or Al, the sintered material includes a plurality of primary particles and a first coating layer forming surface of the primary particle, the first coating layer includes phosphate compound, and the metal phosphate has an average particle size of less than 0.5 μm.

By adding metal phosphate component, both phosphate compound coating and metal cation doping of the primary particle of the cathode material are achieved during the sintering process. The primary particle coating can prevent the primary particle of the cathode material from directly contacting the electrolyte when the secondary particle suffers cracking, thus inhibiting side reactions, which is beneficial to improve the structural stability, thermal stability and long cycle stability of the secondary particle. Moreover, a phosphate compound coating layer with high ionic conductivity at the grain boundary between primary particles is formed, which reduces the grain boundary transport impedance and is conducive to improve the rate performance of the cathode material.

In a specific embodiment, the lithium compound is added in an amount such that the ratio of total molar content of Ni, Co, M, and the metal element in the metal phosphate to the molar content of Li is 1:(0.95 to 1.10). Within this range, Li/Ni cation disarrangement level can be reduced, and residue lithium at the surface of sintered material can be prevented from too high to affect processing performance and safety performance.

Specifically, the lithium compound includes at least one of lithium carbonate, lithium hydroxide, lithium acetate, lithium nitrate and lithium oxalate. Preferably, the lithium compound is lithium hydroxide.

The metal phosphate has an average particle size of less than 0.5 μm, for example, may be 0.001 μm, 0.01 μm, 0.05 μm, 0.1 μm, 0.15 μm, 0.2 μm, 0.25 μm, 0.3 μm, 0.35 μm, 0.4 μm or 0.45 μm.

The metal element of the metal phosphate is selected from at least one of Co, Nb, Al, Ti, Zr, Sr, Mg, Ca, Y, Ba, Cu, W, Nb, La, Ce, Mo and Sn. Typical but non-limiting examples of such combinations are: a combination of $SrHPO_4$ and $Zr(HPO_4)_2$, a combination of $MgHPO_4$ and $Al(H_2PO_4)_3$, etc.

The content of phosphate group in the metal phosphate is 0.03 wt% to 0.3 wt% of the total mass of the mixture. For example, it may be 0.03 wt%, 0.05 wt%, 0.1 wt%, 0.15 wt%, 0.2 wt% or 0.3 wt%, etc. Preferably, the content of phosphate group in the metal phosphate is 0.075 wt% to 0.175 wt% of the total mass of the mixture. The applicant has discovered by numerous experiments that when the content of phosphate group is controlled within this range, a good primary particle coating effect can be achieved whithout reducing the capacity of the cathode material.

In mixing $Ni_aCo_bM_cO$ or $Ni_aCo_bM_c(OH)_2$, a lithium compound, and a metal phosphate, time of the mixing is 0.3 h to 2.0 h, for example, may be 0.3 h, 0.4 h, 0.5 h, 0.7 h, 0.8 h, 1.0 h, 1.2 h, 1.5 h or 2.0h, etc., but is not limited to the listed values, other unlisted values within the range are also applicable. Temperature of the mixing is 10°C to 50°C, for example, 10°C, 15°C, 25°C, 30°C, 35°C, 40°C, 45°C or 50°C, etc. Preferably, the temperature of the mixing is 10°C to 40°C. The applicant has discovered by numerous experiments that, under the mixing conditions, it can not only fully mix evenly, but also prevent the mixed raw materials from side reaction due to excessive temperature.

It is noted that the sintered material is an active material having a first coating layer having a general formula $Li_bNi_xCo_yM_zR_wO_2$, where 0.95≤b≤1.10, 0.8≤x<1, 0<y+z+w≤0.2, x+y+z+w=1, 0.0001≤w≤0.003; M is selected from at least one of Mn or Al; and R includes at least one of Co, Mn, Al, Ti, Zr, Sr, Mg, Ca, Y, Ba, Cu, W, Nb, La, Ce, Mo and Sn.

The first coating layer is a phosphate compound including at least one of $Li_3PO_4$ and $LiR_k(PO_4)_r$, where $0<k\leq2$, $0<r\leq2$, R is selected from at least one of Co, Nb, Al, Ti, Zr, Sr, Mg, Ca, Y, Ba, Cu, W, Nb, La, Ce, Mo and Sn.

Optionally, the mixture is placed in an oxygen-containing atmosphere for sintering at 650°C to 850°C for 6 h to 20 h, to obtain the sintered material by crushing and sieving, where the sintered material includes a plurality of primary particles, and the primary particle has the first coating layer.

The primary particles have an average particle size D50 of 200 nm to 1000 nm, for example, may be 200 nm, 300 nm, 400 nm, 500 nm, 600 nm, 700 nm, 800 nm or 1000 nm.

In this embodiment, the metal phosphate reacts with the lithium compound at high temperature to form the first coating layer of the primary particle, where the first coating layer has a thickness of 0.005 μm to 0.05 μm, for example, may be 0.005 μm, 0.01 μm, 0.015 μm, 0.02 μm, 0.025 μm, 0.03 μm, 0.035 μm, 0.04 μm, 0.045 μm or 0.05 μm. The thickness of the first coating layer may also be other values within the ranges above, which are not limited herein.

The content of crystalline phosphate group in the first coating layer accounts 5 wt% to 50 wt% of the total mass phosphate group, for example, may be 5 wt%, 10 wt%, 15 wt%, 20 wt%, 30 wt%, 40 wt% or 50 wt%.

The oxygen content in the oxygen-containing atmosphere is ≥95% and the temperature of the sintering, for example, may be 650°C, 700°C, 720°C, 730°C, 750°C, 770°C, 780°C, 800°C or 850°C, etc. Preferably, the temperature of the sintering is 720°C to 800°C, but is not limited to the listed values, other unlisted values within the range are also applicable. The applicant has discovered by numerous experiments that sufficient oxygen can promote oxidation of the divalent nickel to trivalent nickel, reducing the Li/Ni cation disarrangement level, and increasing the cathode material capacity. While, this temperature range facilitates the formation of layered structure, and does not tend to causing material decomposition.

The time of the sintering, for example, may be 6 h, 8 h, 10 h, 12 h, 15 h, 18 h, or 20 h, etc., but is not limited to the listed values, other unlisted values within the numerical range are also applicable. The applicant has discovered by numerous experiments that the time of the sintering described above can effectively facilitate the formation of layered structure and uniform primary particle coating layer, further the various performances of the cathode material can be all obtained.

During sintering process, by controlling particle size of the metal phosphate, it facilitates to form a uniform first coating layer on the surface of the primary particle. The content of the crystalline phosphate group in the first coating layer is controlled 5 wt% to 50 wt%, such that the combination between the coating layer and the surface of the cathode material is more stable. While, the primary particle coating can prevent the primary particle of the cathode material from directly contacting the electrolyte when the secondary particle suffers cracking, thus inhibiting side reactions, which is beneficial to improve the structural stability, thermal stability and long cycle stability of the secondary particle. Moreover, a phosphate compound coating layer with high ionic conductivity at the grain boundary between primary particles is formed, which reduces the grain boundary transport impedance and is conducive to improve the rate performance of the cathode material.

S200, washing by a solvent and drying the sintered material at 50°C or below to obtain the cathode material, where the cathode material includes a secondary particle and a second coating layer forming surface of the secondary particle, the secondary particle is an aggregate of primary particles, and the second coating layer includes phosphate compound.

The preparation method of cathode materials provided in this application realizes primary particle coating and metal cationic doping of active materials in the sintering process, and secondary particle coating of cathode materials in washing by wishing the sintered material with solvent including non-aqueous material, which better restrain the lattice lithium loss on the surface of the cathode material, thereby improving the rate performance, thermal stability and cycling stability.

In some embodiments, the solvent includes water and a non-aqueous material, that is, the solvent is obtained by dissolving the non-aqueous material in an aqueous solution. The non-aqueous material includes at least one of phosphoric acid, metaphosphoric acid, phosphorous acid, metaphosphorous acid, pyrophosphoric acid, hypophosphoric acid, soluble phosphate, soluble metaphosphate, soluble phosphite, soluble metaphosphite, soluble pyrophosphate, and soluble hypophosphate. Preferably, the non-aqueous material includes at least one of $H_3PO_4$, $NH_4H_2PO_4$, $(NH_4)_2HPO_4$, $(NH_4)_3PO_4$, $NaH_2PO_4$, $Na_2HPO_4$ and $Na_3PO_4$.

Optionally, the content of the phosphate group in the solvent accounts 0.1 wt% to 0.7 wt% of the total mass of the sintered material, for example, may be 0.1 wt%, 0.15 wt%, 0.2 wt%, 0.3 wt%, 0.4 wt%, 0.5 wt%, 0.6 wt% or 0.7 wt%. Preferably, the content of the phosphate group in the solvent accounts 0.3 wt% to 0.5 wt% of the total mass of the sintered material. The applicant has discovered by numerous experiments that when the phosphate group is controlled within this range, a good secondary particle coating effect can be obtained without reducing the capacity of the cathode material.

It is to be appreciated that during the washing with solvent, the lithium reaction of the non-aqueous material remaining on the surface of sintered material with the surface of sintered material may form a layer of coating, the coating layer having a high lithium ion conductivity, not only increase the rate performance of the material, but also reduce the extent to which the surface of cathode material is corroded by the electrolyte, facilitating improved cycling performance of cathode material.

As an alternative to the present application, the temperature of the washing is 10°C to 50°C, specifically may be 10°C, 15°C, 20°C, 25°C, 30°C, 35°C, 40°C, 45°C or 50°C, etc., but is not limited to the listed values, other unlisted values within the range are also applicable.

As an alternative to the present application, the time of the washing is 10 min to 120 min, specifically may be 10 min, 20 min, 30 min, 60 min, 90 min or 120 min, etc., but is not limited to the listed values, other unlisted values within the range are also applicable.

As an alternative to the present application, the concentration of the slurry consisted of the sintered material and the solvent (sintered material (g)/solvent (L)) is 500 g/L to 2000 g/L, specifically may be 500 g/L, 800 g/L, 1000 g/L, 1250 g/L or 2000 g/L. When the concentration of the slurry is too high, the amount of the solvent is insufficient to reduce the lithium on the surface of the material, thus the surface free lithium of the cathode material is excessive, which easily lead to severe gas generation and increased surface impedance. On the contrary, too low slurry concentration may cause increased washing time, and damage to the structure of primary particles inside the material, loss of lattice lithium in the primary particles and M oxides or lithium M complex compounds on the surface of secondary particles composed of the primary particles.

The solubility of the lithium on the surface of the cathode material is temperature dependent, controlling the temperature of the washing within a reasonable range facilitates controlling the amount of lithium on the surface of the material, as well as the gas generation and processing performance. The temperature of the washing, the concentration of the slurry and the time of the washing affect each other, thus cooperative control of the three conditions facilitates to protecting the surface structure of the cathode material particle, improving the corrosion resistance of the surface of the particle, controlling the amount of lithium on the surface of the material, and reducing the gas generation, thereby effectively improving all of the discharge capacity, thermal stability, rate performance, safety performance and cycle performance.

As an alternative to the present application, the drying is conducted under nitrogen atmosphere. And in other embodiments, the drying may also be conducted under other protective gases, such as argon.

As an alternative to the present application, the temperature of the drying is 80°C to 200°C, specifically may be 80°C, 100°C, 120°C, 150°C, 180°C or 200°C, etc., but is not limited to the listed values, and other unlisted values within the range are also applicable.

As an alternative to the present application, the time of the drying is 5 h to 48 h, specifically may be 5 h, 10 h, 12 h, 15 h, 18 h, 20 h, 24 h, 28 h, 32 h, 36 h, 40 h, 44 h or 48 h, etc, but is not limited to the listed values, and other unlisted values within the range are also applicable.

The average particle size of the secondary particles is 3 $\mu$m to 20 $\mu$m, for example, may be 3 $\mu$m, 4 $\mu$m, 5 $\mu$m, 6 $\mu$m, 7 $\mu$m, 8 $\mu$m, 9 $\mu$m, 10 $\mu$m, 11 $\mu$m, 12 $\mu$m, 13 $\mu$m, 15 $\mu$m or 20 $\mu$m, etc. Preferably, the average particle size of the secondary particles is 10 $\mu$m to 13 $\mu$m. The applicant has discovered by numerous experiments that when the average particle size of the secondary particles is controlled within such range of 3 $\mu$m to 20 $\mu$m, the cracking of the secondary particles during cycling can be avoided, which facilitates to improve the structural stability, thermal stability and long cycle stability of the secondary particle.

The thickness of the second coating layer is 0.02 $\mu$m to 0.2 $\mu$m, for example, may be 0.02 $\mu$m, 0.03 $\mu$m, 0.05 $\mu$m, 0.08 $\mu$m, 0.1 $\mu$m, 0.13 $\mu$m, 0.15 $\mu$m, 0.18 $\mu$m or 0.2 $\mu$m. The thickness of the second coating layer may also be other values within the ranges above, which are not limited herein.

Specifically, a non-aqueous material in the solvent reacts with residual lithium on surface of the sintered material to form the second coating layer, where the content of the crystalline phosphate group in the second coating layer accounts 5 wt% to 50 wt% of the total mass of phosphate group. Specifically, it may be 5 wt%, 10 wt%, 15 wt%, 20 wt%, 25 wt%, 30 wt%, 35 wt%, 40 wt% or 50 wt%.

Further, after washing by a solvent and drying the sintered material, the method further includes:
placing the washed and dried sintered material in an oxygen-containing atmosphere for a heat treatment at 150°C to 600°C for 4 h to 10 h to obtain the cathode material.

Optionally, the temperature of the heat treatment specifically may be 150°C, 200°C, 250°C, 300°C, 350°C, 400°C, 550°C or 600°C, etc.; and the time of the heat treatment specifically may be 4 h, 5 h, 6 h, 7 h, 8 h, 9 h or 10 h, etc., but are not limited to the listed values, other unlisted values within the range are also applicable.

It is to be appreciated that by heat treat treatment of the washed and dried sintered material, the phosphate compound can be more uniformly, firmly coated on the surface of the sintered material, while facilitating the reaction of the non-aqueous material with the residual lithium on surface of the sintered material, reducing the residual alkali, forming a high lithium ion conductive phosphate compound, facilitating control of the content of the crystalline phosphate group in the secondary particle coating layer, improving processing performance and rate performance, and preventing decomposition and lithium precipitation of the sintered material.

Optionally, the mixing employed in the present embodiment may be mechanical mixing, such as by a high-mixer or VC mixer, etc.

The preparation method of cathode materials provided in this application realizes primary particle coating and metal cationic doping of cathode materials in the sintering process, and secondary particle coating of cathode materials in solvent washing; which forms a uniform coating layer on the surface of the cathode material, and better restrain the lattice lithium loss on the surface of the cathode material, thereby improving the rate performance, thermal stability and cycling stability.

In a third aspect, an embodiment of the present application further provides a lithium ion battery including a cathode material as described above or a cathode material prepared by the method for preparing the cathode material as described above.

The following several examples further illustrate the embodiments of the present application. The embodiments herein are not limited to the specific examples described below. Variations may be made as appropriate within the scope of the independent claims.

Example 1

In this example, the method for preparing the cathode material includes the following steps:

(1) the precursor $Ni_{0.88}Co_{0.09}Al_{0.03}(OH)_2$, lithium hydroxide, and $SrHPO_4$ with an average particle size D50 of 0.2 $\mu$m were mixed uniformly in a high-mixer, the temperature of the mixing was controlled to 30°C, and the time of the mixing to 1 h, to obtain a mixture, where $Li/(Ni+Co+Al)=1.05$, and the content of the phosphate group was 0.3 wt% of the total mass of the mixture;

(2) the mixture was sintered at 750°C under an atmosphere with an oxygen content of $\geq$95% for 10 h, then crushed and sieved to obtain a phosphate compound coated sintered material $Li_{1.05}Ni_{0.88}Co_{0.09}Al_{0.03}Sr_{0.0026}O_2$ with Sr doped therein;

(3) the above sintered material $Li_{1.05}Ni_{0.88}Co_{0.09}Al_{0.03}Sr_{0.0026}O_2$ was washed with solvent ($H_2O$ and $NH_4H_2PO_4$) at a ratio of 500 g of the sintered material per 1 L of the solvent at 20°C for 10 min. In the mixture of the sintered material and the solvent, the content of the phosphate group was 0.5 wt% of the total mass of the sintered material. Then a pressure filtration was conducted, and the filter cake was dried at 80°C for 24 h, to obtain a secondary particle coated cathode material;

(4) the cathode material was sintered at 200°C under an atmosphere with an oxygen content of $\geq$95% for 8 h, then crushed and sieved to obtain a phosphate compound coated cathode material $Li_{1.05}Ni_{0.88}Co_{0.88}Al_{0.03}Sr_{0.0026}O_2$.

The cathode material obtained in this example included a plurality of secondary particles, the secondary particle was an aggregate of primary particles; the surface of the primary particle was formed with a first coating layer, the surface of the secondary particle was formed with a second coating layer. Where, the average particle size of the primary particles was 0.6 $\mu$m, the average particle size of the secondary particles was 12 $\mu$m, the material of the primary particle was $Li_{1.05}Ni_{0.88}Co_{0.09}Al_{0.03}Sr_{0.0026}O_2$; the thickness of the first coating layer was 0.04 $\mu$m, the material of the first coating layer was $Li_3PO_4$ and $LiSrPO_4$; the secondary particle was an aggregate of primary particles coated by the first coating layer, the thickness of the second coating layer was 0.06 $\mu$m; the material of the second coating layer was $Li_3PO_4$ and $Li_3Al(PO_4)_2$, the average phosphorus content a on the surface of the cathode material was tested to be 0.231 wt%, and the single point phosphorus content a' at 10 optional points on the surface of the cathode material was 0.209 wt% as a minimum value and 0.245 wt% as a maximum value.

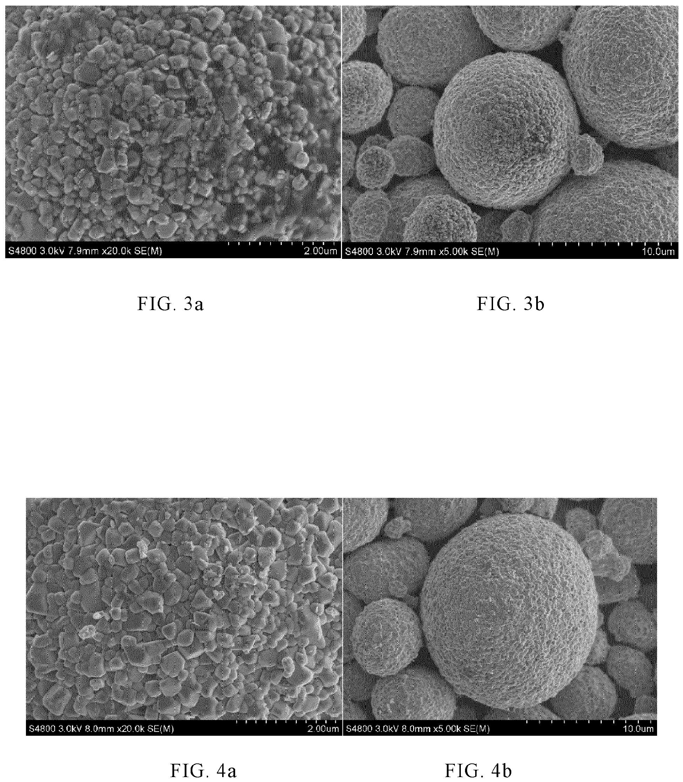

The scanning electron microscope photos of the cathode material S1 prepared in this example are shown in FIGs. 3a and 3b.

The results of performance testing of the cathode material S1 prepared in this example are shown in Table 1.

Example 2

In this example, the method for preparing the cathode material includes the following steps:

(1) the precursor $Ni_{0.83}Co_{0.11}Mn_{0.06}(OH)_2$, lithium hydroxide, and $Zr(HPO_4)_2$ with an average particle size D50 of 0.4 $\mu$m were mixed uniformly in a high-mixer, the temperature of the mixing was controlled to 25°C, and the time of the mixing to 2 h, to obtain a mixture, where $Li/(Ni+Co+Al)=1.03$, and the content of the phosphate group was 0.2 wt% of the total mass of the mixture;

(2) the mixture was sintered at 800°C under an atmosphere with an oxygen content of $\geq$95% for 20 h, then crushed and sieved to obtain a phosphate compound coated sintered material $Li_{1.03}Ni_{0.83}Co_{0.11}Mn_{0.06}Zr_{0.0009}O_2$ with Zr doped therein;

(3) the above sintered material $Li_{1.03}Ni_{0.83}Co_{0.11}Mn_{0.06}Zr_{0.0009}O_2$ was washed with with solvent ($H_2O$ and $N_aH_2PO_4$)

at a ratio of 800 g of the sintered material per 1 L of the solvent at 30 °C for 20 min. In the mixture of the sintered material and the solvent, the content of the phosphate group was 0.3 wt% of the total mass of the sintered material. Then a pressure filtration was conducted, and the filter cake was dried at 120°C for 20 h, to obtain a secondary particle coated cathode material;

(4) the cathode material was sintered at 300°C under an atmosphere with an oxygen content of $\geq$95% for 6 h, then crushed and sieved to obtain a phosphate compound coated cathode material $Li_{1.03}Ni_{0.83}Co_{0.11}Mn_{0.06}Zr_{0.0009}O_2$.

The cathode material obtained in this embodiment included a plurality of secondary particles, the secondary particle was an aggregate of primary particles; the surface of the primary particle was formed with a first coating layer, and the surface of the secondary particle was formed with a second coating layer. Where, the average particle size of the primary particles was 0.7 $\mu$m, the average particle size of the secondary particles was 11.5 $\mu$m, the material of the primary particle is $Li_{1.03}Ni_{0.83}Co_{0.11}Mn_{0.06}Zr_{0.0009}O_2$, the thickness of the first coating layer was 0.02 $\mu$m, the material of the first coating layer was $Li_3PO_4$ and $Li_2Zr(PO_4)_2$; the secondary particle was an aggregates of primary particles coated by the first coating layer, the thickness of the second coating layer was 0.10 $\mu$m; the material of the second coating layer was $Li_3PO_4$, the average phosphorus content a on the surface of the cathode material was tested to be 0.135 wt%, and the single point phosphorus content a' at 10 optional points on the surface of the cathode material was 0.125 wt% as a minimum value and 0.142 wt% as a maximum value.

The results of performance testing of the cathode material S2 prepared in this example are shown in Table 1.

Example 3

In this example, the method for preparing the cathode material includes the following steps:

(1) the precursor $Ni_{0.88}Co_{0.09}Al_{0.03}(OH)_2$, lithium hydroxide, and $MgHPO_4$ with an average particle size D50 of 0.05 $\mu$m, and $Zr(HPO_4)_2$ with a median particle size of 0.4 $\mu$m were mixed uniformly in a high-mixer, the temperature of the mixing was controlled to 20°C, and the time of mixing to 1.5 h, to obtain a mixture, where Li/(Ni+Co+Al)=1.00, and the content of the phosphate group was 0.1 wt% of the total mass of the mixture;

(2) the mixture was sintered at 650°C under an atmosphere with an oxygen content of $\geq$95% for 20 h, then crushed and sieved to obtain a phosphate compound coated sintered material $LiNi_{0.88}Co_{0.09}Al_{0.03}Mg_{0.0009}Zr_{0.0004}O_2$ with Mg and Zr doped therein;

(3) the above sintered material $LiNi_{0.88}Co_{0.09}Al_{0.03}Mg_{0.0009}Zr_{0.0004}O_2$ was washed with solvent ($H_2O$ and $H_3PO_4$) at a ratio of 1000 g of the sintered material per 1 L of the solvent at 40 °C for 30 min. In the mixture of the sintered material and the solvent, the content of the phosphate group was 0.15 wt% of the total mass of the sintered material. Then a pressure filtration was conducted, and the filter cake was dried at 150°C for 12 h, to obtain a secondary particle coated cathode material;

(4) the cathode material was sintered at 500°C under an atmosphere with an oxygen content of $\geq$95% for 10 h, then crushed and sieved to obtain a cathode material $LiNi_{0.88}Co_{0.09}Al_{0.03}Mg_{0.0009}Zr_{0.0004}O_2$ in which both of the primary particle and the secondary particle were coated by the phosphate compound.

The cathode material obtained in this example included a plurality of secondary particles, the secondary particle was an aggregate of primary particles; the surface of the primary particle was formed with a first coating layer, the surface of the secondary particle was formed with a second coating layer. Where the average particle size of the primary particles was 0.3 $\mu$m, the average particle size of the secondary particles was 12 $\mu$m, the material of the primary particle was $LiNi_{0.88}Co_{0.09}Al_{0.03}Mg_{0.0009}Zr_{0.0004}O_2$; the thickness of the first coating layer was 0.01 $\mu$m, the material of the first coating layer was $Li_3PO_4$, $LiMgPO_4$ and $Li_2Zr(PO_4)_2$; the secondary particle was an aggregate of primary particles coated by the first coating layer, the thickness of the second coating layer was 0.15 $\mu$m; the material of the second coating layer was $Li_3PO_4$, the average phosphorus content a on the surface of the cathode material was tested to be 0.069 wt%, and the single point phosphorus content a' at 10 optional points on the surface of the cathode material was 0.063 wt% as a minimum value and 0.074 wt% as a maximum value.

The results of performance testing of the cathode material S3 prepared in this example are presented in Table 1.

Example 4

In this example, the method for preparing the cathode material includes the following steps:

(1) the precursor $Ni_{0.88}Co_{0.09}Al_{0.03}(OH)_2$, lithium hydroxide, and $SrHPO_4$ with an average particle size D50 of 0.2 $\mu$m were mixed uniformly in a high-mixer, the temperature of the mixing was controlled to 15°C, and the time of the mixing to 2 h, to obtain a mixture, where Li/(Ni+Co+Al)=0.95, and the content of the phosphate group was 0.03 wt% of the total mass of the mixture;

(2) the mixture was sintered at 730°C under an atmosphere with an oxygen content of $\geq$95% for 6 h, then crushed and sieved to obtain a phosphate compound coated sintered material $LiNi_{0.88}Co_{0.09}Al_{0.03}Sr_{0.0003}O_2$ with Sr doped therein;

(3) the above sintered material $LiNi_{0.88}Co_{0.09}Al_{0.03}Sr_{0.0003}O_2$ was washed with solvent ($H_2O$, $NaH_2PO_4$ and $H_3PO_4$, in which the molar ratio of phosphate group ion in $NaH_2PO_4$ and $H_3PO_4$ was 1:1) at a ratio of 2000 g of the sintered material per 1 L of the solvent at 50 °C for 60 min. In the mixture of the sintered material and the solvent, the content of the phosphate group was 0.1 wt% of the total mass of the sintered material. Then a pressure filtration was conducted, and the filter cake was dried at 200°C for 10 h, to obtain a secondary particle coated cathode material;

(4) the cathode material was sintered at 500°C under an atmosphere with an oxygen content of $\geq$95% for 5 h, then crushed and sieved to obtain a phosphate compound coated cathode material $LiNi_{0.88}Co_{0.09}Al_{0.03}Sr_{0.0003}O_2$.

The cathode material obtained in this example included a plurality of secondary particles, the secondary particle was an aggregate of primary particles; the surface of the primary particle was formed with a first coating layer, the surface of the secondary particle was formed with a second coating layer; Where, the average particle size of the primary particles was 0.6 $\mu$m, the average particle size of the secondary particles was 11 $\mu$m, the material of the primary particle was $LiNi_{0.88}Co_{0.09}Al_{0.03}Sr_{0.0003}O_2$, the thickness of the first coating layer was 0.008 $\mu$m, the material of the first coating layer was $Li_3PO_4$ and $LiSrPO_4$; the secondary particle was an aggregate of primary particles coated by the first coating layer, the thickness of the second coating layer was 0.18 $\mu$m; the material of the second coating layer was $Li_3PO_4$ and $Li_2Zr(PO_4)_2$, the average phosphorus content a on the surface of the cathode material was tested to be 0.039 wt%, and the single point phosphorus content a' at 10 optional points on the surface of the cathode material was 0.036 wt% as a minimum value and 0.041 wt% as a maximum value.

The results of performance testing of the cathode material S4 prepared in this example are shown in Table 1.

Comparative Example 1

The preparation method and process of Example 1 was employed, except for the difference between Comparative Example 1 and Example 1 that $SrHPO_4$ was not added in step (1), and the solvent used in step (3) was pure water.

The results of performance testing of the cathode material D1 prepared in Comparative Example 1 are shown in Table 1.

The scanning electron microscope photos of the cathode material D1 prepared in Comparative Example 1 are shown in FIGs. 4a and 4b.

The average phosphorus content a on the surface of the cathode material D1 prepared in this comparative example was tested to be 0 wt%, and the single point phosphorus content a' at 10 optional points on the surface of the cathode material D1 was 0 wt%.

Comparative Example 2

The preparation method and process of Example 1 was employed, except for the difference between Comparative Example 2 and Example 1 that the solvent used in step (3) was pure water.

The results of performance testing of the cathode material D2 prepared in Comparative Example 2 are shown in Table 1.

The average phosphorus content a on the surface of the cathode material D2 prepared in this comparative example was tested to be 0.092 wt%, and the single point phosphorus content a' at 10 optional points on the surface of the cathode material D2 was 0.075 wt% as a minimum value and 0.116 wt% as a maximum value.

Comparative Example 3

The preparation method and process of Example 1 was employed, except for the difference between Comparative Example 3 and Example 1 that $SrHPO_4$ was not added in step (1).

The results of performance testing of the cathode material D3 prepared in Comparative Example 3 are shown in Table 1.

The average phosphorus content a on the surface of the cathode material D3 prepared in this comparative example was tested to be 0.154 wt%, and the single point phosphorus content a' at 10 optional points on the surface of the cathode material D3 was 0.135 wt% as a minimum value and 0.173 wt% as a maximum value.

Comparative Example 4

The preparation method and process of Example 1 was employed, except for the difference between Comparative Example 4 and Example 1 that the average particle size of $SrHPO_4$ added in step (1) was 10 μm.

The results of performance testing of the cathode material D4 prepared in Comparative Example 4 are shown in Table 1.

The average phosphorus content a on the surface of the cathode material D4 prepared in this comparative example was tested to be 0.245 wt%, and the single point phosphorus content a' at10 optional points on the surface of the cathode material D4 was 0.183 wt% as a minimum value and 0.302 wt% as a maximum value.

Comparative Example 5

The preparation method and process of Example 1 was employed, except for the difference between Comparative Example 5 and Example 1 that during the washing with solvent, the temperature of the washing was 80°C and the time of the washing was 60 min.

The results of performance testing of the cathode material D5 prepared in Comparative Example 5 are shown in Table 1.

The average phosphorus content a on the surface of the cathode material D5 prepared in this comparative example was tested to be 0.198 wt%, and the single point phosphorus content a' at 10 optional points on the surface of the cathode material D5 was 0.152 wt% as a minimum value and 0.226 wt% as a maximum value.

Test Methods

A scanning electron microscope was used to analyze the morphology of the cathode material, and scanning electron microscope photos were obtained.

The single point phosphorus content a' on the surface of the cathode material was tested using an energy dispersive X-ray spectrometer (EDS) installed by the scanning electron microscope.

The average phosphorus content a on the surface of the cathode material was tested using an energy dispersive X-ray spectrometer (EDS) installed by the scanning electron microscope.

Electrochemical performance evaluation of the prepared cathode material was performed using a coin half-cell as follows: the cathode material, conductive carbon black Super P and polyvinylidene fluoride (PVDF) were weighed in a mass ratio of 96:2:2, followed by adding N-methylpyrrolidone in a solids content of 50%, blended to a viscous slurry with a high speed disperser, uniformly coated on aluminum foil with a scraper, dried in an oven at 80°C, and subjected to roll pressing, tailored to a cathode sheet with a diameter of 14 mm. A lithium sheet with a diameter of 16 mm was used as an anode sheet, a Celgard polypropylene PP film was used as a separator, a solution of $LiPF_6$ in carbonate (1:1 of volume ratio of diethyl carbonate DEC/ethylene carbonate EC) with a concentration of 1 mol/L was used as an electrolyte, and the coin half-cell was assembled in a glove box filled with argon.

A LAND cell test system was used to perform the capacity, initial coulombic efficiency and rate performance test at 25°C and 3.0V to 4.3V, where the reference capacity was set to 200 mA/g, the corresponding current density at 1C was 200 mA/g.

A potentiometric titrator was used to detect the total amount of lithium compound on the surface of the cathode material. Specifically, by titration with hydrochloric acid, the amount of lithium compound was calculated by the amount of consumed hydrochloric acid.

The cathode material particle was cut by focused ion beam, and a high precision energy dispersive spectroscopy was used to perform an elemental line scan on the cross-section of the cut particle, so as to calculate the distribution location of phosphate compound coating layer according to the line scan element curve.

A NETZSCH differential scanning calorimeter was used to perform a thermal stability testing on the electrode material in a closed high pressure crucible by 5°C/min at nitrogen atmosphere, to obtain a differential scanning thermal curve. The electrode material was an active material that was scraped from the fully charged electrode sheet of the coin cell after 2.5 weeks cycling at 0.1C.

A Bruker X-ray diffractometer was used to test the structure composition of the cathode material, and the content of the crystalline phosphate group in the coating layer phosphate compound was obtain by refined calculation of the X-ray diffraction pattern.

The results of the performance testing described above are as follows:

Table of Performance Comparison Results

| Sample | 0.1C Discharge Capacity (mAh/g) | Initial Coulombic Efficiency (%) | 0.5C Discharge Capacity (mAh/g) | 1C Discharge Capacity (mAh/g) | 2C Discharge Capacity (mAh/g) | 4C Discharge Capacity (mAh/g) | 6C Discharge Capacity (mAh/g) | Capacity retention at 1C/ 50 Weeks (%) | Surface Free lithium content (wt%) | Crystalline Phosphate Group Content (%) |
|---|---|---|---|---|---|---|---|---|---|---|
| S1 | 211.1 | 90.5 | 199.9 | 197.4 | 193.4 | 188.0 | 180.1 | 97.8 | 0.11 | 44 |
| S2 | 209.1 | 90.7 | 196.6 | 193.1 | 188.1 | 183.3 | 172.8 | 97.8 | 0.10 | 35 |
| S3 | 210.5 | 90.3 | 197.0 | 192.7 | 189.6 | 184.3 | 175.2 | 97.3 | 0.08 | 24 |
| S4 | 209.1 | 90.0 | 195.3 | 190.3 | 183.4 | 176.8 | 171.3 | 98.1 | 0.06 | 20 |
| D1 | 192.8 | 89.3 | 188.4 | 181.3 | 175.7 | 162.4 | 140.6 | 88.5 | 0.21 | / |
| D2 | 201.2 | 87.6 | 189.0 | 183.0 | 176.2 | 162.3 | 148.8 | 90.0 | 0.22 | 59 |
| D3 | 206.1 | 89.2 | 190.1 | 183.2 | 177.9 | 164.7 | 158.2 | 92.0 | 0.27 | 25 |
| D4 | 206.0 | 89.1 | 193.2 | 188.6 | 182.3 | 175.2 | 170.1 | 94.5 | 0.36 | 40 |
| D5 | 205.5 | 88.9 | 191.1 | 185.2 | 179.2 | 172.4 | 168.7 | 96.1 | 0.32 | 53 |

It can be seen in FIGs. 3a and 3b that, the cathode material obtained in Example 1 forms a uniform coating on the surface of the secondary particle, and the gap between the primary particles is filled with phosphate compound such that the grain boundary contact is very tight, and the coating layer is very tightly combined with the cathode material.

It can be seen in FIGs. 4a and 4b that, the surface of the secondary particle of cathode material obtained in Comparative Example 1 is relatively smooth, without coating layer; while, the gap between the primary particles is large, so that the electrolyte easily permeates into the secondary particle.

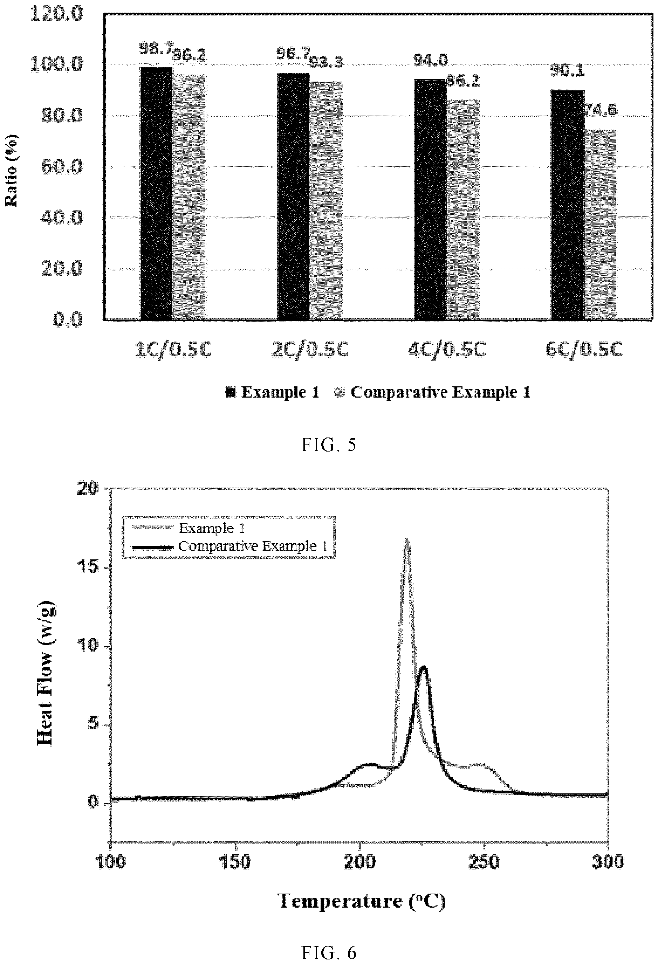

As shown in FIG. 5, the rate performance of the cathode material obtained in Example 1 is better than that of Comparative Example 1, indicating that the rate performance of the cathode material without the phosphate compound coating on the primary particle is obviously poor.

As shown in FIG. 6, the decomposition temperature and the exothermic heat of the corresponding cathode material of Example 1 are better than Comparative Example 1, indicating that the phosphate compound coating on the primary particle and the secondary particle of the cathode material facilitates to increase the thermal stability of the cathode material

It can be seen in Table 1 that, the electrochemical properties of cathode materials prepared by Examples 1-5 of the present application are all superior, the discharge capacities are 209 mAh/g or more, the initial coulombic efficiencies are up to about 90%, the rate performance is good, the long cycle performance is prominent, and the content of the surface free lithium are lower.

It can be seen from the data comparison of Example 1 and Comparative Example 2 in Table 1, neither primary nor secondary particles are coated with the phosphate compound, the surface residual alkali of the cathode material are high, and the rate performance, discharge capacity and cycling performance are all affected. As shown from the data comparison of Example 1 and Comparative Example 2, When non-aqueous solvent is not used in the secondary coating process, the surface residual alkali of the prepared cathode material is severely high and cannot be passed by the processing testing.

It can be seen from the data comparison of Example 1 and Comparative Example 3 and Comparative Example 4, when no metal phosphate ($SrHPO_4$) is added or the particle size of the added metal phosphate is too large during the first coating, it does not facilitate to form a uniform first coating layer of the metal phosphate on the surface of the primary particle. The surface residual alkali of the prepared cathode material is high, and the rate capability, the discharge capacity and the cycle performance are all affected.

It can be seen from the data comparison of Example 1 and Comparative Example 5 that, too high of the washing temperature is easily causing the content of the surface free lithium to rise, and also tends to cause a non-uniform coating layer on the surface of the active material, thereby affecting the rate performance, discharge capacity and cycling performance of the cell.

While the present application has been disclosed by preferred embodiments, it is not to limit the claims. Those skilled in the art can make various changes and modifications without departing from the concepts of the present application. Therefore, the scope of the present application shall be accorded the scope as defined by the following claims.

**Claims**

1. A cathode material, **characterized in that** the cathode material comprises:

a secondary particle comprising a plurality of primary particles, wherein the primary particle comprises an active material having a chemical formula $Li_bNi_xCo_yM_zR_wO_2$, wherein $0.95 \leq b \leq 1.10$, $0.8 \leq x < 1$, $0 < y+z+w \leq 0.2$, $x+y+z+w=1$, $0.0001 \leq w \leq 0.003$; M is selected from at least one of Mn and Al; and R is a doped metal; and
a coating layer comprising a first coating layer and a second coating layer, wherein the first coating layer forms on a surface of the primary particle, the second coating layer forms on a surface of the secondary particle, and the first coating layer and the second coating layer both comprise phosphate compound;
the single point phosphorus content a' at any point on the surface of the cathode material and the average phosphorus content a on the surface of the cathode material satisfy the following relationship:

$$0.9a \leq a' \leq 1.1a;$$

wherein, a' and a are obtained by the following test method:
in the case of observing the cathode material by a scanning electron microscope, conducting an EDS point scanning at any point on the surface of cathode material for testing phosphorus content to obtain the a', while conducting an EDS surface scanning at a quadrilateral area randomly selected having a side length of 100 $\mu$m in the field of view of the scanning electron microscope for testing phosphorus content to obtain the a.

2. The cathode material according to claim 1, **characterized in that** R in the $Li_bNi_xCo_yM_zR_wO_2$ comprises at least one of Co, Mn, Al, Ti, Zr, Sr, Mg, Ca, Y, Ba, Cu, W, Nb, La, Ce, Mo and Sn.

3. The cathode material of claim 1 or 2, **characterized in that** the cathode material satisfies at least one of the following conditions a to k:

   a. the secondary particle is spherical or spherical-like in shape;
   b. the primary particles have an average particle size of 200 nm to 1000 nm, and the secondary particles have an average particle size of 3 $\mu$m to 20 $\mu$m;
   c. the phosphate compound comprises at least one of $Li_3PO_4$ and $LiR_k(PO_4)_r$, wherein $0<k\leq2$, $0<r\leq2$, and R is selected from at least one of Co, Nb, Al, Ti, Zr, Sr, Mg, Ca, Y, Ba, Cu, W, Nb, La, Ce, Mo and Sn;
   d. a preparation raw material of the phosphate compound of the first coating layer comprises metal phosphate and lithium compound, and a preparation raw material of the phosphate compound of the second coating layer comprises at least one of phosphoric acid, metaphosphoric acid, phosphorous acid, metaphosphorous acid, pyrophosphoric acid, hypophosphoric acid, soluble phosphate, soluble metaphosphate, soluble phosphite, soluble metaphosphite, soluble pyrophosphate and soluble hypophosphate;
   e. a content of phosphate group of the phosphate compound in the first coating layer accounts 0.03 wt% to 0.3 wt% of the total mass of the secondary particle;
   f. a content of phosphate group of the phosphate compound in the second coating layer accounts 0.1 wt% to 0.7 wt% of the total mass of the secondary particle and the first coating layer;
   g. a content of crystalline phosphate group of the phosphate compound in the first coating layer or the second coating layer accounts 5 wt% to 50 wt% of the total mass of phosphate group;
   h. the first coating layer has a thickness of 0.005 $\mu$m to 0.05 $\mu$m;
   i. the second coating layer has a thickness of 0.02 $\mu$m to 0.2 $\mu$m;
   j. the powder conductivity of the cathode material is greater than 0.02 S/cm under pressure of 4 kN/cm$^2$; and
   k. the specific surface area of the cathode material is 0.2 m$^2$/g to 2.0 m$^2$/g.

4. A method for preparing a cathode material, **characterized in that** the method comprises:

   mixing $Ni_aCo_bM_cO$ or $Ni_aCo_bM_c(OH)_2$, a lithium compound, and a metal phosphate to obtain a mixture, sintering the mixture to obtain a sintered material, wherein a+b+c=1, $0.8\leq a<1$, $0<b+c\leq0.2$, M is selected from at least one of Mn or Al, the sintered material comprises a plurality of primary particles and a first coating layer forming on surface of the primary particle, the first coating layer comprises phosphate compound, and the metal phosphate has an average particle size of less than 0.5 $\mu$m; and
   washing by a solvent and drying the sintered material at 50°C or below to obtain the cathode material, wherein the cathode material comprises a secondary particle and a second coating layer forming surface of the secondary particle, the secondary particle is an aggregate of primary particles, and the second coating layer comprises phosphate compound.

5. The method of claim 4, **characterized in that** the method satisfies at least one of the following conditions a to f:

   a. the lithium compound is added in an amount such that the ratio of the total molar content of Ni, Co, M, and the metal element in the metal phosphate to the molar content of Li is 1:(0.95 to 1.10);
   b. the lithium compound comprises at least one of lithium carbonate, lithium hydroxide, lithium acetate, lithium nitrate and lithium oxalate;
   c. a metal element of the metal phosphate is selected from at least one of Co, Nb, Al, Ti, Zr, Sr, Mg, Ca, Y, Ba, Cu, W, Nb, La, Ce, Mo and Sn;
   d. a content of phosphate group in the metal phosphate is 0.03 wt% to 0.3 wt% of the total mass of the mixture;
   e. a condition for obtaining the mixture is: solid phase mixing at 10°C to 50°C for 0.3 h to 2 h; and
   f. a condition for obtaining the sintered material is: sintering at 650°C to 850°C for 6 h to 20 h under an oxygen-containing atmosphere.

6. The method of claim 4, **characterized in that** the method satisfies at least one of the following conditions a to b:

   a. the solvent comprises water and a non-aqueous material, wherein the non-aqueous material comprises at least one of phosphoric acid, metaphosphoric acid, phosphorous acid, metaphosphorous acid, pyrophosphoric acid, hypophosphoric acid, soluble phosphate, soluble metaphosphate, soluble phosphite, soluble metaphosphite, soluble pyrophosphate, and soluble hypophosphate; and

b. a content of phosphate group in the solvent accounts 0.1 wt% to 0.7 wt% of the total mass of the sintered material.

7. The method of claim 4 or 6, **characterized in that** the method satisfies at least one of the following conditions a to f:

   a. a temperature of the washing is 10°C to 50°C;
   b. a concentration of the slurry consisted of the sintered material and the solvent (sintered material (g)/solvent (L)) is 500 g/L to 2000 g/L;
   c. a time of the washing is 10 min to 120 min;
   d. the drying is carried out under nitrogen atmosphere condition;
   e. a temperature of the drying is 80°C to 200°C; and
   f. a time of the drying is 5 h to 48 h.

8. The method of claim 4, **characterized in that** after washing by a solvent and drying the sintered material, the method further comprises:
   placing the washed and dried sintered material in an oxygen-containing atmosphere for a heat treatment at 150°C to 600°C for 4 h to 10 h to obtain the cathode material.

9. The method of claim 4, **characterized in that** the method satisfies at least one of the following conditions a to f:

   a. the metal phosphate reacts with the lithium compound at high temperature to form the first coating layer of the primary particle;
   b. phosphate anion in the solvent reacts with residual lithium on surface of the sintered material to form the second coating layer of the secondary particle;
   c. the phosphate compound comprises at least one of $Li_3PO_4$ and $LiR_k(PO_4)_r$, wherein $0<k\leq2$, $0<r\leq2$, R is selected from at least one of Co, Mn, Al, Ti, Zr, Sr, Mg, Ca, Y, Ba, Cu, W, Nb, La, Ce, Mo and Sn;
   d. a content of crystalline phosphate group of the phosphate compound in the first coating layer or the second coating layer accounts 5 wt% to 50 wt% of the total mass of phosphate group;
   e. the primary particles have an average particle size of 200 nm to 1000 nm, and the first coating layer has a thickness of 0.005 $\mu$m to 0.05 $\mu$m; and
   f. the secondary particles have an average particle size of 3 $\mu$m to 20 $\mu$m and the second coating layer has a thickness of 0.02 to 0.2 $\mu$m.

10. A lithium ion battery, **characterized in that** the lithium ion battery comprises a cathode material according to any one of claims 1 to 3 or a cathode material prepared by the method for preparing the cathode material according to any one of claims 4 to 9.

EP 4 290 615 A1

FIG. 1

mixing $Ni_aCo_bM_cO$ or $Ni_aCo_bM_c(OH)_2$, a lithium compound, and a metal phosphate to obtain a mixture, sintering the mixture to obtain a sintered material, wherein a+b+c=1, $0.8{\leq}a{<}1$, $0{<}b+c{\leq}0.2$, M is selected from at least one of Mn or Al, the sintered material comprises a plurality of primary particles and a first coating layer forming on surface of the primary particle, the first coating layer comprises phosphate compound, and the metal phosphate has an average particle size of less than 0.5 μm

S100

washing by a solvent and drying the sintered material at 50°C or below to obtain the cathode material, wherein the cathode material comprises a secondary particle and a second coating layer forming surface of the secondary particle, the secondary particle is an aggregate of primary particles, and the second coating layer comprises phosphate compound

S200

FIG. 2

FIG. 3a                              FIG. 3b

FIG. 4a                              FIG. 4b

FIG. 5

FIG. 6

<div align="center">

**INTERNATIONAL SEARCH REPORT**

</div>

| International application No. |
| --- |
| **PCT/CN2022/077289** |

**A. CLASSIFICATION OF SUBJECT MATTER**

H01M 4/525(2010.01)i; H01M 4/62(2006.01)i; H01M 10/0525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; WOTXT; USTXT; EPTXT; CNKI: 电池, 正极材料, 包覆, 磷, 含量, 能量色散X射线光谱仪, battery, positive electrode material, coat, phosphorus, content, energy dispersive X-ray spectrometer, EDS

**C. DOCUMENTS CONSIDERED TO BE RELEVANT**

| Category* | Citation of document, with indication, where appropriate, of the relevant passages | Relevant to claim No. |
| --- | --- | --- |
| Y | CN 112382741 A (SHENZHEN CITY BATTERY NANOMETER TECHNOLOGY CO., LTD.) 19 February 2021 (2021-02-19) description, paragraphs 5-176, and figures 1-5 | 1-10 |
| Y | CN 102881911 A (CENTRAL SOUTH UNIVERSITY) 16 January 2013 (2013-01-16) description, paragraphs 12-62, and figures 1-8 | 1-10 |
| Y | CN 110190254 A (SOUTH CHINA UNIVERSITY OF TECHNOLOGY) 30 August 2019 (2019-08-30) description, paragraphs 5-43, and figures 1-8 | 1-10 |
| A | CN 112447966 A (NINGDE CONTEMPORARY AMPEREX TECHNOLOGY CO., LTD.) 05 March 2021 (2021-03-05) entire document | 1-10 |
| A | CN 114050255 A (SHENZHEN CITY BATTERY NANOMETER TECHNOLOGY CO., LTD.) 15 February 2022 (2022-02-15) entire document | 1-10 |
| A | US 2021126256 A1 (SAMSUNG SDI CO., LTD.) 29 April 2021 (2021-04-29) entire document | 1-10 |

☐ Further documents are listed in the continuation of Box C. ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **16 October 2022** | **27 October 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/077289**

| Patent document cited in search report | | | Publication date (day/month/year) | Patent family member(s) | | | Publication date (day/month/year) |
|---|---|---|---|---|---|---|---|
| CN | 112382741 | A | 19 February 2021 | WO | 2022078300 | A1 | 21 April 2022 |
| | | | | KR | 20220071233 | A | 31 May 2022 |
| CN | 102881911 | A | 16 January 2013 | CN | 102881911 | B | 22 April 2015 |
| CN | 110190254 | A | 30 August 2019 | None | | | |
| CN | 112447966 | A | 05 March 2021 | WO | 2021042981 | A1 | 11 March 2021 |
| | | | | EP | 3944379 | A1 | 26 January 2022 |
| | | | | US | 2022185698 | A1 | 16 June 2022 |
| CN | 114050255 | A | 15 February 2022 | None | | | |
| US | 2021126256 | A1 | 29 April 2021 | KR | 20210051026 | A | 10 May 2021 |
| | | | | KR | 102341407 | B1 | 20 December 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210142538